# EUROPÄISCHE PATENTANMELDUNG

(11) **EP 0 681 357 A1**
(43) Veröffentlichungstag der Anmeldung: **08.11.1995**
(21) Anmeldenummer: 95103132.7
(22) Anmeldetag: 04.03.1995
(51) Int. Cl.: H02J 7/10

(54) **Verfahren zum Abschalten des Ladevorganges von Akkumulatoren**

(30) Priorität: 04.05.1994 DE 4416368
(71) Anmelder: DeTeWe FUNKWERK KOPENICK GmbH, D-12557 Berlin (DE)
(72) Erfinder: Einhorn, Jörg, D-12489 Berlin (DE)

(57) **Zusammenfassung**

Die Erfindung beschreibt ein Verfahren zum Abschalten des Ladevorganges von Akkumulatoren schnurloser Telefone bei Erreichen der Volladung durch Anwendung eines Differenz-Spannungsverfahrens und einer zusätzlichen zeitlichen Überwachung bei konstantem Verlauf der Ladespannung.

## Beschreibung

Die Erfindung bezieht sich auf ein Verfahren zum Abschalten des Ladevorganges von Akkumulatoren in Handgeräten schnurloser Telefone, deren Mikrorechner den Ladevorgang überwacht, bei Erreichen der Volladung.

Schnurlose Telefone bestehen aus einer Basisstation, einem Handgerät und einer Ladestation. Dabei können Basisstation und Ladestation eine Einheit bilden. Die Handgeräte der schnurlosen Telefone werden mittels Nickel-Cadmium- oder Nickel-Metallhydrid-Akkumulatoren betrieben. Die Ladestation dient neben der Ladung auch der Aufnahme des Handgerätes mit eingesetztem Akkumulator. Zum Überwachen des Ladezustandes des Akkumulators und um einen Schnelladevorgang zum richtigen Zeitpunkt zu beenden, wird vorzugsweise ein Differenz-Spannungsverfahren angewendet. Solch ein Verfahren, auch bekannt unter der Bezeichnung Minus-Delta-U-Verfahren, ist technisch relativ aufwendig, jedoch äußerst zuverlässig. Bei diesem Verfahren ist das Absinken der Ladespannung ein Maß für die vollständige Aufladung des Akkumulators (DE 41 25 410 A1, DE 43 07 968 A1).

Bei der Anwendung des Minus-Delta-U-Verfahrens in schnurlosen Telefonen tritt jedoch ein entscheidender Nachteil auf: Hebt der Benutzer das Handgerät nur kurz von der Ladestation ab, da beispielsweise keine Verbindung zustande gekommen ist, um es gleich wieder aufzulegen, wird dem Akkumulator keine nennenswerte Energie entnommen. Das Ladeüberwachungsverfahren beginnt jedoch prinzipbedingt wieder mit der Schnelladung des nahezu noch zu 100 % geladenen Akkumulators. Geschieht das mehrmals hintereinander, so führt dies zu einer zyklisch leichten Überladung, die die Temperatur des Akkumulators ansteigen läßt. Findet dieser Vorgang so häufig statt, daß sich eine stationäre Temperatur am Akkumulator einstellt, also die dem Akkumulator zugeführte elektrische Energie gleich der abgegebenen Wärmeenergie ist, tritt folgender Effekt ein: Aufgrund der nun konstanten Temperatur des Akkumulators bleibt die Ladespannungskennlinie konstant und es kommt nicht mehr zum typischen Absinken der Ladespannung, das vom Minus-Delta-U-Verfahren als Abschaltekriterium für den Ladevorgang ausgewertet wird. In diesem Fall versagt das Verfahren und die ständig weitere Ladung kann zur Zerstörung des Akkumulators führen.

Der gleiche Effekt kann auch dann auftreten, wenn während des Schnelladevorganges äußere Wärmequellen auf den Akkumulator einwirken.

Der Erfindung lag die Aufgabe zugrunde, bei der Schnelladung von Akkumulatoren schnurloser Telefone ein rechtzeitiges Abschalten des Ladevorganges auch bei untypischem Verlauf der Ladespannungskennlinie zu gewährleisten.

Diese Aufgabe ist durch die Erfindung gelöst, wie sie im Patentanspruch 1 dargelegt ist.

Die Erfindung wird anhand zweier Ladespannungskennlinien für den Ladevorgang näher beschrieben.

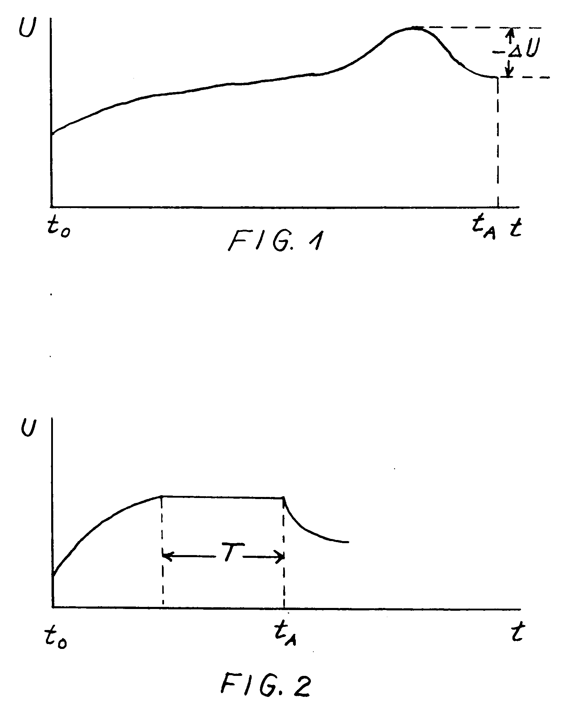

Das Handgerät eines schnurlosen Telefons enthält u. a. einen Mikrorechner für Steuerungszwecke, der außerdem die Auswertung für das Minus-Delta-U-Verfahren umfaßt. Im Handgerät ist außerdem die Batterieladeschaltung angeordnet, mit einer Erfassung und Aufbereitung der Meßsignale zur Steuerung des Ladestroms. Bei normaler Nutzung wird nach Beendigung einer Fernsprechverbindung das Handgerät wieder auf der Ladestation abgelegt. Der dann beginnende Ladevorgang zum Zeitpunkt t₀ (Figur 1) für den Akkumulator zeigt ein Ansteigen der Ladespannung bis zu einem Maximum. Der danach einsetzende Spannungsabfall kennzeichnet die vollständige Aufladung des Akkumulators, wobei der negative Spannungsabfall, Minus-Delta-U, zum Abschalten des Ladevorganges zum Zeitpunkt t_{A} führt.

Gemäß dem eingangs geschilderten Fall mehrfacher nur kurzer Abnahme des Handgerätes von der Ladestation, bei der keine nennenswerte Energie dem Akkumulator entnommen wird, oder die Einwirkung äußerer Wärmequellen, z. B. Heizung, Sonneneinstrahlung usw. führt zu einem Ladevorgang, bei dem ein Spannungsabfall nicht eintritt (Figur 2).

Um eine Abschaltung des Ladevorganges zu bewirken und damit einer Zerstörung des Akkumulators vorzubeugen, wird erfindungsgemäß zusätzlich zum Minus-Delta-U-Verfahren ein Zeitkriterium zum Abschalten des Ladevorganges eingesetzt. Erkennt der Mikrorechner des Handgerätes nicht mehr einen Anstieg der Ladespannung, startet er ein Zeitglied. Der Ladevorgang wird danach durch den Ablauf des Zeitgliedes, beispielsweise nach einigen Minuten, abgeschaltet, wenn innerhalb dieser Zeit die Ladespannung weiterhin konstant geblieben ist.

Das Abschalten nach Ablauf der vorgegebenen Zeit T bei unveränderter Ladespannung kennzeichnet somit den Zustand einer Gefahr des Überladens des Akkumulators. Dieser Zustand kann zusätzlich als Signal dem Benutzer angezeigt werden, um ihn zur Abstellung äußerer Einflüsse zu veranlassen, z. B. Behebung von Heizungseinflüssen, Abschatten gegen Sonneneinstrahlung usw.

## Patentansprüche

1. Verfahren zum Abschalten des Ladevorganges von Akkumulatoren in Handgeräten schnurloser Telefone, deren Mikrorechner den Ladevorgang überwacht, bei Erreichen der Volladung, gekennzeichnet durch die Anwendung eines Differenz-Spannungsverfahrens und eine zusätzliche zeitliche Überwachung bei konstantem Verlauf der Ladespannung.

2. Verfahren nach Anspruch 1, gekennzeichnet durch Anwendung des Minus-Delta-U-Verfahrens.

3. Verfahren nach Anspruch 1, gekennzeichnet durch den Ablauf eines vom Mikrorechner gesteuerten Zeitgliedes des Handgerätes bei Erreichen einer konstanten Ladespannung.

4. Verfahren nach Anspruch 3, gekennzeichnet durch die Abgabe eines Signals nach dem Abschalten des Ladevorganges durch das Zeitglied.
